# EUROPEAN PATENT APPLICATION

(11) **EP 2 434 330 A1**
(43) Date of publication of application: **28.03.2012**
(21) Application number: 11182134.4
(22) Date of filing: 21.09.2011
(51) Int. Cl.: G02C 7/10, G02B 1/10

(54) **Method of manufacturing eyeglass lens**

(30) Priority: 24.09.2010 JP 2010213631; 24.09.2010 JP 2010213636
(71) Applicant: Hoya Corporation, Tokyo 161-8525 (JP); Hoya Lens Thailand Ltd., Patumthani (TH)
(72) Inventor: Iwata, Nobuyoshi, Tokyo, 161-8525 (JP); Tadokoro, Nobuyuki, Tokyo, 161-8525 (JP); Sukbumpeng, Anutasara, 12130 Thanyaburi, Patumthani (TH)
(74) Representative: Beckmann, Claus

(57) **Abstract**

An aspect of the present invention relates to a method of manufacturing an eyeglass lens having a functional film on a lens substrate, which comprises determining materials for manufacturing an eyeglass lens by implementing a prescribed material determining method and manufacturing an eyeglass lens by use of the materials that have been determined.

## Description

### FIELD OF THE INVENTION

The present invention relates to a method of manufacturing an eyeglass lens, and more particularly, to a method of manufacturing an eyeglass lens that can provide an eyeglass lens with high durability.

### BACKGROUND OF THE INVENTION

### DISCUSSION OF THE BACKGROUND

The forming of various functional films, such as a hardcoat film and an antireflective film, on a lens substrate to impart desired performance to an eyeglass lens is widely practiced (for example, see Japanese Unexamined Patent Publication (KOKAI) Heisei No. 11-311702).

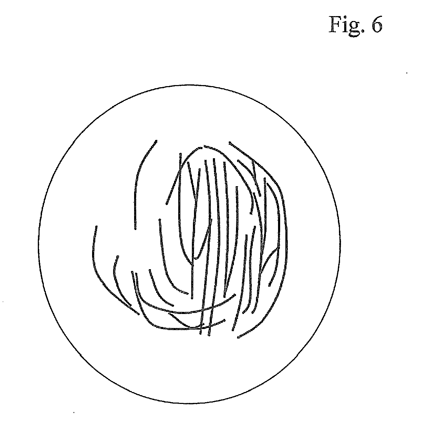

One example of a characteristic that is required of an eyeglass lens is that it be of good durability and not deteriorate when placed in various environments. For example, there are people who wear eyeglasses in the bath, place eyeglasses in automobiles in summer, and are active for extended periods outdoors. Thus, it is desirable for good quality to be maintained without cracking or separation of the functional films, even when exposed to high temperatures, high humidity, or UV radiation. This is because an eyeglass lens that develops cracks, such as that shown in the schematic drawing of Fig. 6, will decrease in transparence due to the cracks, with deterioration in appearance and wear comfort. Numerous cracks tend to occur in an eyeglass lens near the geometric center of the lens, impeding the view of the wearer.

In light of the above circumstances, durability tests such as heat resistance evaluation by heating in an oven, and evaluation by QUV accelerated weathering tests (also referred to as "QUV tests", hereinafter) have been adopted as methods of evaluating eyeglass lenses in recent years. QUV testing is weathering testing in which the sample being tested is subjected to a repeated cycle of irradiation with UV radiation and exposure to dew condensation in a dark location to accelerate deterioration. An eyeglass lens that does not exhibit cracking or separation of functional films following heating in an oven or QUV testing will exhibit good durability without deterioration for an extended period of actual use.

The above durability testing has become indispensable for reliably providing an eyeglass lens exhibiting good durability over an extended period. Currently, however, to manufacture an eyeglass lens that will pass durability testing requires a process of trial and error in the form of determining candidate materials (lens substrate material and functional film materials) for manufacturing a finished eyeglass lens, using the materials that have been determined to prepare an eyeglass lens, testing the durability of the eyeglass lens that has been prepared by QUV testing or heating in an oven, and when the eyeglass lens fails to satisfy evaluation standards, repeating the series of steps from the selection of candidate materials on.

### SUMMARY OF THE INVENTION

An aspect of the present invention provides for a means of conveniently determining eyeglass lens manufacturing materials that permits the manufacturing of an eyeglass lens of good durability.

The present inventors conducted extensive research to discover the above means, resulting in the following new knowledge.
The present inventors took eyeglass lenses sequentially comprising an organic hardcoat film and an inorganic antireflective film on a plastic lens substrate and observed the change in shape over time during QUV testing of those eyeglass lenses exhibiting clouding over the entire lens following QUV testing. They discovered that it was cracks originating near the interface between the hardcoat film and the lens substrate, not at the interface between the hardcoat film and the antireflective film, that caused the clouding.
Conventionally, the cracking in eyeglass lenses of the above structure has been thought to occur at the interface between the films due to differences in the coefficients of thermal expansion of the hardcoat layer comprised of organic material and antireflective film comprised of inorganic material (see Japanese Unexamined Patent Publication (KOKAI) No. 2006-259507). The above phenomenon whereby cracks originate in the vicinity of the interface between the hardcoat film and a plastic lens substrate that is also made of organic material was surprising. In this regard, the present inventors presumed the cause of cracking originating in the hardcoat film to be the accumulation of distortion at the interface of the hardcoat film and the lens substrate accompanying deformation of the lens substrate and the dehydration condensation reaction of the organic hardcoat during QUV testing. That is, the behavior of thermal expansion and contraction of the film material in the finished lens state was affected by the lens substrate positioned in the layer beneath it and other functional films and thus different from the intrinsic thermal expansion and contraction characteristics of the film material. Accordingly, cracks cannot be effectively inhibited by focusing on the intrinsic thermal expansion and contraction characteristics of the film material alone.
The present inventors conducted further research based on the above knowledge, resulting in the discovery that manufacturing an eyeglass lens of good durability required determining the lens substrate and film material based on the thermal expansion and contraction characteristics of a sample with a layer structure identical to that of the finished lens. The present invention was devised on that basis.

That is, an aspect of the present invention relates to a method of manufacturing an eyeglass lens having a functional film on a lens substrate, which comprises:
determining materials for manufacturing an eyeglass lens by implementing at least one method from among:
a method of determining materials for manufacturing an eyeglass lens having a functional film on a lens substrate (referred to as "material determining method 1" or "method 1", hereinafter), comprising:
selecting candidate materials for the lens substrate and the functional film;
determining a difference in a thermal expansion and contraction characteristic of a substrate sample comprised of the candidate material for the lens substrate and a lens sample in which a film of the candidate material for the functional film has been formed on the substrate sample; and
determining materials for use in actual manufacturing in the form of a combination of candidate materials such that the difference in the thermal expansion and contraction characteristic falls at or below a predetermined standard; and
a method of determining materials for manufacturing an eyeglass lens having at least a first functional film and a second functional film in this order on a lens substrate (referred to as "material determining method 2" or "method 2", hereinafter), comprising:
selecting candidate materials for the lens substrate, the first functional film, and the second functional film;
determining a difference in a thermal expansion and contraction characteristic of at least two from among a substrate sample comprised of the candidate material for the lens substrate, a first lens sample in which a film of the candidate material for the first functional film has been formed on the substrate sample, and a second lens sample in which a film of the candidate material for the second functional film has been formed on the first lens sample; and
determining materials for use in actual manufacturing in the form of a combination of candidate materials such that the difference in the thermal expansion and contraction characteristic falls at or below a predetermined standard; and
manufacturing an eyeglass lens by use of the materials that have been determined.

In an eyeglass lens comprised of three or more layers of functional films laminated on a lens substrate, a functional film that is present as an intermediate layer between two functional films is subjected to stress by both the functional films in adjacent positions above and below it. Accordingly, by selecting the material of the functional film that is present as an intermediate layer in the form of a suitable combination with the materials of the functional films above and below it, deterioration originating in the intermediate layer may occur, or an adjacent functional film may end up becoming the starting point of deterioration, due to stress imparted by the intermediate layer. The same applies to the intermediate layer present between the lens substrate and a functional film.
Due to the above, the present inventors thought that it might be possible to effectively prevent deterioration of the eyeglass lens because it was possible to avoid causing deterioration due to the intermediate layer through suitable selection based on the material of the lens substrate and functional films present above and below the intermediate layer after determining materials other than the intermediate layer based on desired physical characteristics. Based on the new knowledge discovered by the present inventors, as set forth above, the behavior of thermal expansion and contraction of the film material in the finished lens state would be affected by the lens substrate positioned in the layer beneath it and by other functional films, and thus different from the intrinsic thermal expansion and contraction characteristic of the film material. Therefore, cracks cannot be effectively inhibited by focusing on the intrinsic thermal expansion and contraction characteristics of the film material alone.
Accordingly, the present inventors conducted further research based on the above knowledge, resulting in the discovery that manufacturing an eyeglass lens of good durability required determining the intermediate layer material based on the thermal expansion and contraction characteristics of a sample with a layer structure identical to that of the finished lens. The present invention was devised on that basis.

That is, a further aspect of the present invention relates to a method of manufacturing an eyeglass lens having a functional film on a lens substrate, which comprises:
determining materials for manufacturing an eyeglass lens by implementing at least one method from among:
a method of determining materials for manufacturing an eyeglass lens having a first functional film and a second functional film in this order on a lens substrate (referred to as "material determining method 3" or "method 3", hereinafter), comprising:
determining a material of the lens substrate and a material of the second functional film for use in actual manufacturing;
determining a candidate material for the first functional film;
preparing a substrate sample comprised of the lens substrate material, a first lens sample in which a film of the candidate material is formed on the substrate sample, and a second lens sample in which a film of the second functional film material is formed on the first lens sample;
determining a thermal expansion and contraction characteristic of the samples that have been prepared;
determining a material of the first functional film for use in actual manufacturing in the form of a candidate material such that the thermal expansion and contraction characteristic of the first lens sample approximates to within a predetermined standard range the thermal expansion and contraction characteristic of the substrate sample and second lens sample; and
a method of determining materials for manufacturing an eyeglass lens having a first functional film, a second functional film, and a third functional film in this order on a lens substrate (referred to as "material determining method 4" or "method 4", hereinafter), comprising:
determining a material of the first functional film and a material of the third functional film for use in actual manufacturing;
determining a candidate material for the second functional film;
preparing a first lens sample in which a film of the first functional film material is formed on a substrate sample, a second lens sample in which a film of the candidate material is formed on the first lens sample, and a third lens sample in which a film of the third functional film material is formed on the second lens sample;
determining a thermal expansion and contraction characteristic of the samples that have been prepared; and
determining a material of the second functional film for use in actual manufacturing in the form of a candidate material such that the thermal expansion and contraction characteristic of the second lens sample approximates to within a predetermined standard range the thermal expansion and contraction characteristics of the first lens sample and third lens sample; and
manufacturing an eyeglass lens by use of the materials that have been determined.

The lens sample in methods 1 to 4 may be a sample in which a film of the candidate material for the functional film is formed on a lateral surface of the substrate sample with a pillar shape.

The thermal expansion and contraction characteristic in methods 1 to 4 is a coefficient of thermal expansion calculated from an amount of displacement as determined by thermomechanical analysis (TMA).

The present invention can provide an eyeglass lens of good durability in which deterioration such as cracking and separation of functional films does not occur even when placed in a severe environment for extended periods.

### BRIEF DESCRIPTION OF THE DRAWINGS

Fig. 1 is a schematic sectional view of the substrate sample and lens samples in methods 1 and 2.
Fig. 2 is a schematic view of a TMA device in which a sample has been placed.
Fig. 3 is a schematic sectional view of the substrate sample and lens samples in methods 3 and 4.
Fig. 4 shows specific examples of the layer configuration of eyeglass lenses obtained by the manufacturing method of the present invention including determining the materials for use in an eyeglass lens manufacturing by implementing methods 3 and 4.
Fig. 5 shows specific examples of the thermal expansion curves of a substrate sample and lens samples.
Fig. 6 shows a schematic drawing of an eyeglass lens in which cracking has occurred.

### DETAILED DESCRIPTION OF THE EMBODIMENTS

An aspect of the present invention relates to a method of manufacturing an eyeglass lens having a functional film on a lens substrate, comprising: determining materials for manufacturing an eyeglass lens by implementing at least material determining method 1 or material determining method 2; and manufacturing an eyeglass lens by use of the materials that have been determined.
As set forth above, material determining method 1 is a method of determining materials for manufacturing an eyeglass lens having a functional film on a lens substrate, comprising:
selecting candidate materials for the lens substrate and the functional film;
determining a difference in a thermal expansion and contraction characteristic of a substrate sample comprised of the candidate material for the lens substrate and a lens sample in which a film of the candidate material for the functional film has been formed on the substrate sample; and
determining materials for use in actual manufacturing in the form of a combination of candidate materials such that the difference in the thermal expansion and contraction characteristic falls at or below a predetermined standard.
Material determining method 2 is a method of determining materials for manufacturing an eyeglass lens having at least a first functional film and a second functional film in this order on a lens substrate, comprising:
selecting candidate materials for the lens substrate, the first functional film, and the second functional film;
determining a difference in a thermal expansion and contraction characteristic of at least two from among a substrate sample comprised of the candidate material for the lens substrate, a first lens sample in which a film of the candidate material for the first functional film has been formed on the substrate sample, and a second lens sample in which a film of the candidate material for the second functional film has been formed on the first lens sample; and
determining materials for use in actual manufacturing in the form of a combination of candidate materials such that the difference in the thermal expansion and contraction characteristic falls at or below a predetermined standard.
Material determining method 1 differs from material determining method 2, which also includes an embodiment of selecting a candidate material based on the difference between a thermal expansion and contraction characteristic of "lens samples," in that a candidate material is selected based on the differences in a thermal expansion and contraction characteristic of a "substrate sample" and a "lens sample." However, material determining methods 1 and 2 share the point of determining materials for manufacturing an eyeglass lens based on a thermal expansion and contraction characteristic of samples laminated with the same structures as the finished lens, independently of the intrinsic thermal expansion and contraction characteristics of the film forming material.
Material determining methods 1 and 2 will be described in greater detail below.

In methods 1 and 2, the eyeglass lens for which materials for use in manufacturing are being determined comprises at least one layer of a functional film on a lens substrate. Two layers, three layers, four layers, or even more of functional films can be present on the lens substrate. In method 2, two, three, four, or even more lens samples can be prepared based on the layer configuration of the targeted eyeglass lens, and a thermal expansion and contraction characteristic thereof can be evaluated.

The candidate material for the lens substrate is selected from among materials that commonly constitute lens substrates, such as plastics and inorganic glasses.

Examples of functional films are the various functional films that are commonly provided to impart desired performance to an eyeglass lens, such as hardcoat films, antireflective films, primers, polarizing films, water-repellent films, lubricant films, UV-absorbing films, IR-absorbing films, photochromic films, and antistatic films. In the present invention, after determining the layer configuration of the finished lens, a candidate material for forming a functional film contained in the layer configuration is selected from among known materials.

In method 1, the difference between the thermal expansion and contraction characteristic of a substrate sample comprised of the candidate material for the lens substrate that has been selected and that of a lens sample in which a film of the candidate material for the functional film that has been selected has been formed is determined. For example, a material can be selected as the candidate material for the lens substrate and two or more materials can be selected as candidate materials for functional films, after which the candidate materials for the functional films can be combined with the lens substrate and multiple samples can be prepared. Conversely, it is also possible for one material to be selected as a candidate material for the functional film and two or more candidate materials to be selected for the lens substrate, after which the candidate materials for the lens substrate and the functional film are combined and multiple samples are prepared. Still further, two ore more candidate materials can be selected for each of the lens substrate and the functional film, the candidate materials for the lens substrate and functional films can be combined, and multiple samples can be prepared.

In method 2, the difference between the thermal expansion and contraction characteristic of samples can be determined for the substrate sample and the first, and/or second, lens sample, or can be determined for the first lens sample and the second lens sample. In method 2, as well, there can be one, two, or more candidate materials for the lens substrate and candidate materials for each of the functional films.

The thermal expansion and contraction characteristic serving as an index for determining materials in the present invention can be, for example, the coefficient of thermal expansion (coefficient of linear expansion or coefficient of volumetric expansion), the amount of deformation during heating (amount of displacement), or the integral value, shape, or the like of the thermal expansion curve when the coefficient of thermal expansion or amount of deformation during heating is plotted on the y-axis and the temperature at the measurement is plotted on the x-axis. These thermal expansion and contraction characteristics can be determined with a known coefficient of thermal expansion measuring device. From the perspective of ease of measurement, determination with a thermomechanical analyzer (TMA) is desirable.

In TMA, the amount of deformation (deformation length) is determined when a load is applied to a test piece that is being heated, and the coefficient of thermal expansion is calculated from the amount of deformation using a known mathematical equation. In the TMA measurement, it is desirable to employ a test piece with a pillar shape (round or square columnar shape). An example of the method of preparing substrate samples and lens samples for this use is given below.

### Example of the method of preparing samples

(1) A platelike member comprised of the candidate material for a lens substrate is prepared. Subsequently, a portion of the platelike member is cut off to obtain a substrate sample with a pillar shape. The substrate sample can be prepared by injection molding, cast polymerization, or some other known molding method.
(2) The remainder of the platelike member is subjected to a film forming treatment using the candidate material for the functional film. To increase the reliability of evaluation, it is desirable to create the same state as the functional film in the eyeglass lens. Thus, it is desirable to conduct film formation by the same method as the method of forming the targeted functional film.
(3) In method 2, after forming a film using the candidate material for the first functional film in (2) above, a portion is cut off to obtain the first lens sample, after which the candidate material for the second functional film is used to form a film on the remainder of the platelike member to prepare a second lens sample.

An example of successively obtaining samples by cutting the required portions from a single platelike member has been described above. However, as described in Examples further below, multiple platelike members can be fabricated in step (1), one platelike member can be used to prepare the substrate sample, and the other platelike members can be used in steps (2) and (3).

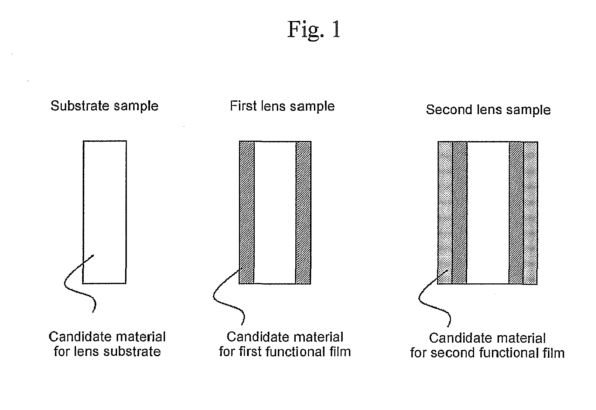

Fig. 1 shows schematic sectional views of a substrate sample and lens samples obtained based on the above example. The candidate materials for the functional films can be used to form films on just one lateral surface of a square columnar substrate sample, but when films are formed on just one side, there may be a possibility that distortion will only be produced in the substrate portion by contraction and expansion of the films that are formed, affecting the comparison results of the samples. In this regard, it is desirable to provide layers of the candidate materials for the functional films on a pair of opposing lateral surfaces as shown in Fig. 1. The pairs of opposing lateral surfaces in square columnar samples will be parallel or approximately parallel. Films of the candidate materials for the functional films can be formed on the upper and lower surfaces of the lens samples, or left off.

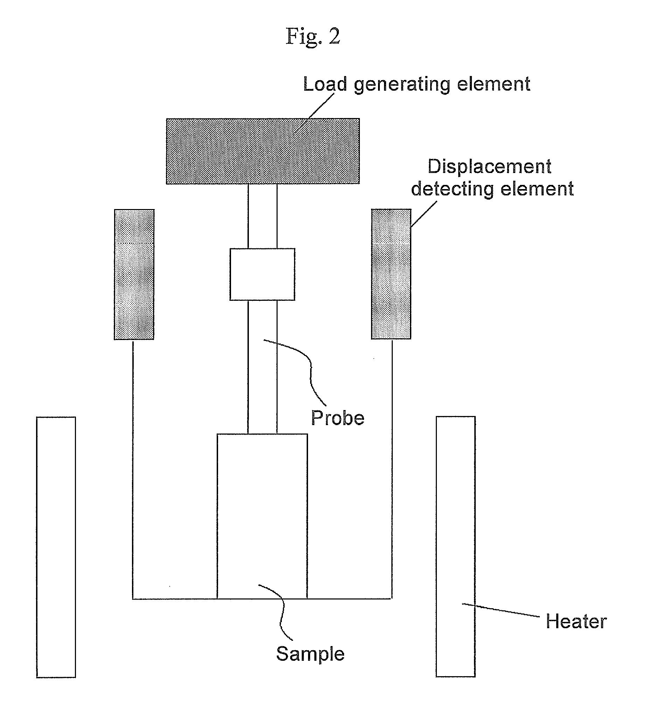

In the measurement of thermal expansion and contraction characteristics by TMA, the samples with a pillar shape (substrate sample or lens samples) that have been prepared are positioned within the heater of a TMA device, and a load is applied through a probe from the upper surface of the sample. Fig. 2 shows a schematic view of a TMA device in such a state. When the measurement temperature is varied at a constant rate, the sample deforms with expansion or contraction (thermal expansion/contraction) corresponding to the change in temperature. The amount of change in position of the probe due to this deformation can be measured by a displacement detecting element to determine the amount of displacement due to heating, and the coefficient of thermal expansion can be calculated by a known mathematical equation from the results obtained.
The measurement of thermal expansion and contraction characteristics by TMA has been described above. However, the present invention is not limited to embodiments in which measurement is conducted by TMA. The temperature range over which measurement of the thermal expansion and contraction characteristic is conducted is desirably determined taking into account the temperatures to which the finished lens will be exposed. A range including a temperature range of 30 to 150°C (desirably a temperature range of 30 to 100°C) is suitable.

The fact that the greater the difference in the thermal expansion and contraction characteristic measured between samples as set forth above, the greater the tendency for cracks to form in portions where the difference was large once an eyeglass lens had been manufactured was discovered as a result of extensive research by the present inventors. The present invention was devised based on this new knowledge. For example, in the course of measuring the coefficient of thermal expansion of a substrate sample, first lens sample, and second lens sample, when the difference in the coefficient of thermal expansion of the substrate sample and the first lens sample is markedly greater than the difference in the coefficient of thermal expansion of the first lens sample and the second lens sample and an eyeglass lens is manufactured using the materials that were used to prepare the samples, following QUV testing, cracking originating in the vicinity of the interface of the first functional film and the lens substrate was observed to spread throughout the first functional film over time, and the film was observed to rupture (the rupturing was also observed to cause separation of the second functional film formed over the first functional film). Accordingly, the selection of materials in combinations that reduced the difference in the thermal expansion and contraction characteristic between the substrate sample and lens sample and the difference in the thermal expansion and contraction characteristic between lens samples made it possible to provide an eyeglass lens of good durability to a degree where cracking and film separation were not observed following QUV testing.
In the case where the materials of the lens substrate and first functional film have already been determined, for example, it is possible to measure just a thermal expansion and contraction characteristic of the first lens sample and second lens sample, not conduct measurement relating to the substrate sample, and determine the material of the two functional films from the difference in the thermal expansion and contraction characteristic between the lens samples.

In method 2, as set forth above, based on the layer configuration of the targeted eyeglass lens, two, three, four, or more lens samples can be prepared and a thermal expansion and contraction characteristic thereof can be evaluated. Further, there is no limitation whereby the first lens sample for which the thermal expansion and contraction characteristic is evaluated must be formed of a candidate material for a functional film that is directly provided on the lens substrate in the targeted eyeglass lens. For example, to determine the material of an eyeglass lens having a hardcoat film and an antireflective film over a primer on the lens substrate, it is possible to prepare the first lens sample from the candidate material for the hardcoat film and prepare the second lens sample from the candidate material for the antireflective film. So long as the thermal expansion and contraction characteristic is not greatly affected, other layers (such as lubricant layers) can be provided above or below layers comprised of candidate materials.

The difference in the thermal expansion and contraction characteristic serving as the standard in the course of determining the materials to use in actual manufacturing can be determined based on the use environment envisioned for the targeted eyeglass lens, and is not specifically limited. When making the determination, preliminary tests can be conducted and a database prepared. For example, as preliminary tests, a number of eyeglass lenses for testing can be subjected to oven heating, QUV testing, or the like, and the materials constituting the eyeglass lenses for testing can be used to prepare substrate samples and lens samples and to measure the thermal expansion and contraction characteristic. Subsequently, the differences in the thermal expansion and contraction characteristic between samples in which deterioration in durability has been observed (for example, the occurrence of cracks or separation, or clouding accompanying such occurrence) following oven heating, QUV testing, or the like in the eyeglass lenses for testing can be made thresholds (limit values). It then suffices to select the materials employed in actual manufacturing from among the candidate materials so as to achieve combinations at or below the limit values. The device and conditions used to evaluate the finished lens are desirably employed as the testing device (oven, QUV accelerated weathering testing device, or the like) and testing conditions.
In this manner, it is possible to determine materials permitting the manufacturing of an eyeglass lens having good durability based on methods 1 and 2 without having to use trial and error by repeating a series of steps of actually manufacturing eyeglass lenses, conducting durability testing by oven heating, QUV testing, or the like, and selecting a new candidate material if the evaluation standards are not satisfied. Methods 1 and 2 also afford an advantage in that they permit the quantification of selection standards for materials that have conventionally been difficult. Based on methods 1 and 2, it is possible to select materials permitting the manufacturing of eyeglass lenses of high enough durability to pass durability testing such as oven heating and QUV testing from among candidate materials. Accordingly, the method of manufacturing an eyeglass lens of the present invention comprising determining materials for use in manufacturing an eyeglass lens by implementing at least method 1 or method 2 makes it possible to provide eyeglass lenses of good durability without deterioration such as the occurrence of cracking or film separation even after durability testing. The eyeglass lens can be manufactured by sequentially laminating functional films by a film forming method such as dipping, spin coating, or vapor deposition on a lens substrate formed by a prescribed molding method such as cast polymerization or injection molding. Both the above molding methods and film forming methods are known.

The method of manufacturing an eyeglass lens relating to an aspect of the invention has been described above. The present invention also provides a method of manufacturing an eyeglass lens having an functional film on a lens substrate, comprising implementing at least material determining method 3 or material determining method 4 to determine materials for manufacturing an eyeglass lens, and manufacturing an eyeglass lens using the materials that have been determined.
As set forth above, material determining method 3 is a method of determining materials for manufacturing an eyeglass lens having a first functional film and a second functional film in this order on a lens substrate, comprising:
determining a material of the lens substrate and a material of the second functional film for use in actual manufacturing;
determining a candidate material for the first functional film;
preparing a substrate sample comprised of the lens substrate material, a first lens sample in which a film of the candidate material is formed on the substrate sample, and a second lens sample in which a film of the second functional film material is formed on the first lens sample;
determining a thermal expansion and contraction characteristic of the samples that have been prepared;
determining a material of the first functional film for use in actual manufacturing in the form of a candidate material such that the thermal expansion and contraction characteristic of the first lens sample approximates to within a predetermined standard range the thermal expansion and contraction characteristic of the substrate sample and second lens sample
Material determining method 4 is a method of determining materials for manufacturing an eyeglass lens having a first functional film, a second functional film, and a third functional film in this order on a lens substrate, comprising:
determining a material of the first functional film and a material of the third functional film for use in actual manufacturing;
determining a candidate material for the second functional film;
preparing a first lens sample in which a film of the first functional film material is formed on a substrate sample, a second lens sample in which a film of the candidate material is formed on the first lens sample, and a third lens sample in which a film of the third functional film material is formed on the second lens sample;
determining a thermal expansion and contraction characteristic of the samples that have been prepared; and
determining a material of the second functional film for use in actual manufacturing in the form of a candidate material such that the thermal expansion and contraction characteristic of the second lens sample approximates to within a predetermined standard range the thermal expansion and contraction characteristics of the first lens sample and third lens sample.
Both material determining methods 3 and 4 share the point that the film forming material of an intermediate layer (the first functional film positioned between the lens substrate and the second functional film in method 3, and the second functional film positioned between two functional films in method 4) is determined based on a thermal expansion and contraction characteristic of samples laminated on the same structure as the finished lens, independently from the intrinsic thermal expansion and contraction characteristic of the film forming material. Both methods make it possible to determine the material of the lens substrate positioned below an intermediate layer and the material of the function film positioned above it based on desired characteristics, and make it possible to inhibit deterioration of the eyeglass lens by selecting a suitable material for the intermediate layer in combination with the materials that have been determined.
Material determining methods 3 and 4 will be described in greater detail below.

The eyeglass lens for which the materials used in manufacturing are determined by methods 3 and 4 comprises functional films on a lens substrate. Method 3 targets an eyeglass lens in which two or more functional films are laminated on a lens substrate, and method 4 targets an eyeglass lens in which three or more functional films are laminated on a lens substrate.

A suitable material is selected based on desired optical characteristics from among the materials that commonly constitute lens substrates, such as plastics and inorganic glasses, as the material of the lens substrate for use in actual manufacturing.

Specific examples of functional films have been described above. In methods 3 and 4, after determining the layer configuration of the finished lens, suitable materials are selected from among known materials based on the characteristics required of the various functional films as materials for forming the functional films other than the intermediate layer contained in the layer configuration in actual manufacturing. After selecting candidate materials from among known materials based on the characteristics required of the functional films, the material of the intermediate layer used in actual manufacturing is determined by the following method.

That is, in methods 3 and 4, the materials of the lens substrate positioned below the intermediate layer and the functional film positioned above it, or the functional films positioned both below and above it, can be determined based on desired characteristics, as set forth above. An intermediate layer material that does not cause deterioration by imparting substantial stress between it and the lens substrate below it or the functional film above it, or between it and the functional films below and above it, in combination with the materials that have been determined is then selected by the method described below. Methods 3 and 4 make it possible to determine a material that is capable of forming an intermediate layer that can function as a stress-mitigating layer without having to resort to trial and error by repeating a process of the steps of actually manufacturing eyeglass lenses and evaluating them as has conventionally been done.

In method 3,
- a substrate sample comprised of the lens substrate material that has been determined;
- a first lens sample in which a film of the candidate material for the first functional film that has been selected is formed on the substrate sample; and
- a second lens sample, in which a film of a second functional film material that has been determined is formed on the first lens sample, are prepared and a thermal expansion and contraction characteristic thereof is determined.

In method 4,
- a first lens sample in which a film of the first functional film material that has been determined is formed on a substrate sample;
- a second lens sample in which a film of the candidate material for the second functional film material that has been determined is formed on the first lens sample; and
- a third lens sample, in which film of the third functional film material that has been determined is formed on the second lens sample, are prepaerd, and a thermal expansion and contraction characteristic thereof is determined. In method 4, the substrate sample can be prepared from the lens substrate material that is used in actual manufacturing, or from some other material. To increase the reliability of evaluation, it is desirable to create the same state in the sample as in the targeted eyeglass lens, and thus desirable to use a substrate sample that has been prepared from the lens substrate material that is used in actual manufacturing.

In methods 3 and 4, the details of the thermal expansion and contraction characteristic serving as an index in determining the material of the intermediate layer are as described for methods 1 and 2 above. The thermal expansion and contraction characteristic can be determined by a known coefficient of thermal expansion measuring device. To that end, use of a thermomechanical analyzer (TMA) is desirable from the perspective of simplifying measurement. The details of the TMA are as set forth above. An example of the method of preparing the substrate sample and lens samples for methods 3 and 4 are given below.

### Example of the method of preparing samples

(1) A platelike member comprised of the lens substrate material is prepared. Subsequently, a portion of the platelike member is cut off to obtain a substrate sample with a pillar shape. The substrate sample can be prepared by injection molding, cast polymerization, or some other known molding method.
(2) A film of the first functional film material (the candidate material in method 3) is formed on the remainder of the platelike member. To increase the reliability of evaluation, it is desirable to create the same state in the functional film as in the eyeglass lens. Thus, in the course of preparing the sample, it is desirable to form the film by the same method as that used to form the film of the targeted functional film.
(3) After forming a film of the first functional film material in (2) above, a portion is cut off to obtain a first lens sample. Subsequently, a film of the second functional film material (the candidate material in method 4) is then formed on the remainder of the platelike member to prepare a second lens sample.
(4) In method 4, after forming the film in (3) above, a portion is cut off to obtain a second lens sample, and a film of the third functional film material is then formed over the remainder of the platelike member to prepare a third lens sample.

The example of cutting off necessary portions from a single platelike member to successively obtain samples has been described above. However, as described in Examples set forth further below, it is also possible to prepare multiple platelike members in step (1), employ one member to prepare the substrate sample, and employ the other platelike members in steps (2) to (4).

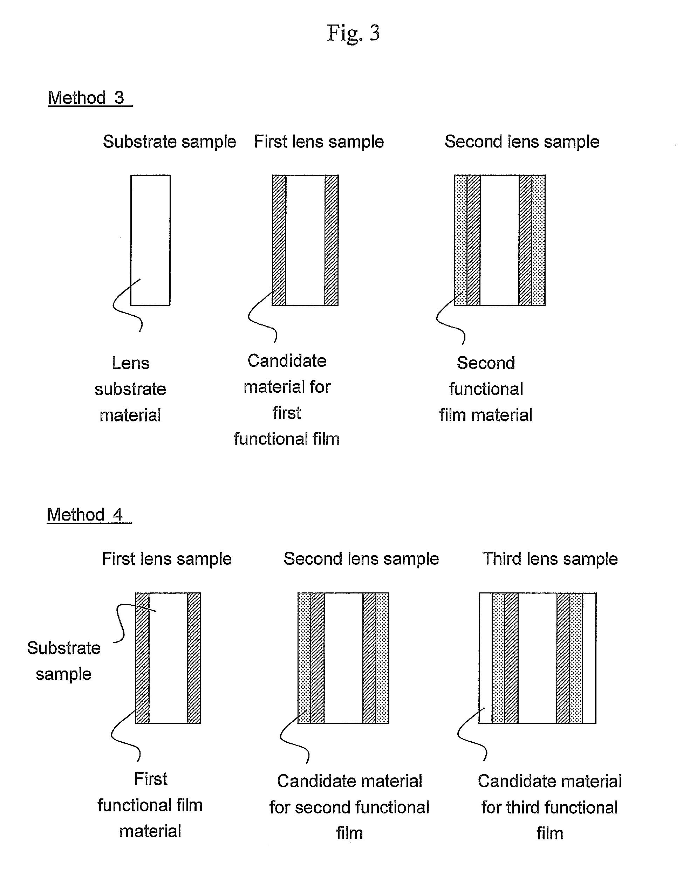

Fig. 3 shows schematic sectional views of the substrate sample and the lens samples obtained based on the above example. The functional film material can be formed on just one lateral surface of the square columnar substrate sample, but for the reasons stated above, the layer comprised of the functional film material is desirable provided on a pair of opposing lateral surfaces as shown in Fig. 3. Other details regarding the samples and measuring methods of methods 3 and 4 are as described for methods 1 and 2 above.

The fact that the greater the difference in the thermal expansion and contraction characteristic measured between samples as set forth above, the greater the tendency for cracks to form in portions where the difference was large once an eyeglass lens had been manufactured was discovered as a result of extensive research by the present inventors. The present invention was devised based on this new knowledge. For example, in the course of measuring the coefficient of thermal expansion of the substrate sample, first lens sample, and second lens sample, when the difference in the coefficient of thermal expansion of the substrate sample and the first lens sample was markedly greater than the difference in the coefficient of thermal expansion of the first lens sample and the second lens sample and an eyeglass lens was manufactured using the materials that were used to prepare the samples, following QUV testing, cracking originating in the vicinity of the interface of the first functional film and the lens substrate was observed to spread throughout the first functional film over time, and the film was observed to rupture (the rupturing was also observed to cause separation of the second functional film formed over the first functional film). Accordingly, the selection of an intermediate layer material in method 3 to reduce the difference in the thermal expansion and contraction characteristics of the substrate sample and lens sample, and in method 4 to reduce the difference in the thermal expansion and contraction characteristic between lens samples, makes it possible to provide an eyeglass lens of good durability to a degree where cracking and film separation are not observed following QUV testing.

In method 4, there is no limitation whereby the first lens sample must be formed of a functional film material that is directly positioned on the lens substrate in the targeted eyeglass lens. For example, to determine the material of the hardcoat film (an intermediate layer) in an eyeglass lens sequentially comprising a primer, a photochromic film, a hardcoat film, and an antireflective film on a lens substrate, a first lens sample can be prepared from the photochromic film material determined for use in actual manufacturing, the second lens sample can be prepared from a candidate material for the hardcoat film, and a third lens sample can be prepared from the antireflective film material determined for use in actual manufacturing. When targeting the manufacturing of an eyeglass lens in which another functional film is inserted between the first functional film and the lens substrate in this manner, reproducing the same layer structure as in the targeted eyeglass lens is desirable from the perspective of evaluation reliability. For example, in this case, it is desirable to prepare the first lens sample by forming a film of a photochromic film material after forming the layer comprised of the primer material on the substrate sample. To the extent that the thermal expansion and contraction characteristic is not greatly affected, it is possible to provide another layer (such as a lubricant layer) above or below the layer comprised of the material determined for use in actual manufacturing or the candidate material in each sample.

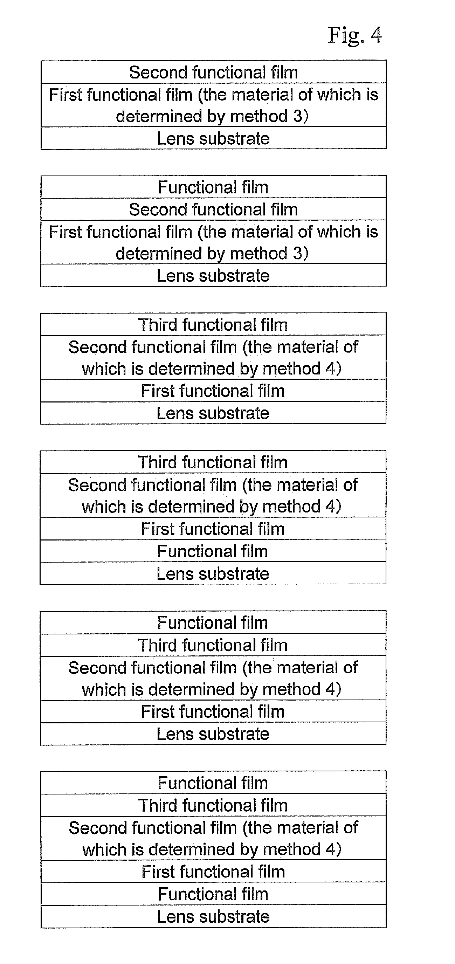

The difference in the thermal expansion and contraction characteristic serving as the standard in the course of determining the intermediate layer materials to use in actual manufacturing can be determined based on the use environment envisioned for the targeted eyeglass lens, and is not specifically limited. When making the determination, preliminary tests can be conducted and a database prepared. For example, as preliminary tests, a number of eyeglass lenses for testing can be subjected to oven heating, QUV testing, or the like, and the materials constituting the eyeglass lenses for testing can be used to prepare substrate samples and lens samples and to measure a thermal expansion and contraction characteristic. Subsequently, the differences in the thermal expansion and contraction characteristic between samples in which deterioration in durability has been observed (for example, the occurrence of cracks or separation, or clouding accompanying such occurrence) following oven heating, QUV testing, or the like in the eyeglass lenses for testing can be made thresholds (limit values). It then suffices to select the intermediate layer materials employed in actual manufacturing from among the candidate materials so as to achieve combinations at or below the limit values. The device and conditions used to evaluate the finished lens are desirably employed as the testing device (oven, QUV accelerated weathering testing device, or the like) and testing conditions.
In this manner, it is possible to determine materials permitting the manufacturing of eyeglass lenses having good durability based on methods 3 and 4 without having to use trial and error by repeating a series of steps of actually manufacturing eyeglass lenses, conducting durability testing by oven heating, QUV testing, or the like, and selecting a new candidate material if the evaluation standards are not satisfied. Methods 3 and 4 also afford an advantage in that they permit the quantification of selection standards for materials that have conventionally been difficult. Based on methods 3 and 4, it is possible to select intermediate layer materials permitting the manufacturing of eyeglass lenses of high enough durability to pass durability testing such as oven heating and QUV testing from among candidate materials. Accordingly, the method of manufacturing an eyeglass lens of the present invention comprising determining materials for use in manufacturing eyeglass lenses by implementing at least method 3 or method 4 makes it possible to provide eyeglass lenses of good durability without deterioration such as the occurrence of cracking or film separation even after durability testing. Fig. 4 shows specific examples of the layer configuration of an eyeglass lens obtained based on the above manufacturing method. As set forth above, the eyeglass lens can be manufactured by sequentially laminating functional films by a film forming method such as dipping, spin coating, or vapor deposition on a lens substrate formed by a prescribed molding method such as cast polymerization or injection molding. Both the above molding methods and film forming methods are known.

### EXAMPLES

The present invention will be described based on Examples below. However, the present invention is not limited to the embodiments shown in Examples.

### [Example 1]

### 1-1. Selecting candidate materials

Six resin materials of differing composition and refractive index were selected as candidate materials for a lens substrate for manufacturing an eyeglass lens having a hardcoat layer and an antireflective film in this order on a lens substrate.
An organic hardcoat liquid was selected as the hardcoat film material and an inorganic vapor deposition material for forming a multilayer antireflective film was selected as the antireflective film material.

### 1-2. Preparation of a substrate sample and lens samples

Three plastic sheets comprised of the candidate material for the lens substrate were prepared for each candidate material. One sheet was retained without forming a film, and the two remaining sheets were dip coated with the organic hardcoat liquid and heat treated (cured) to form hardcoat films. Of the two, one was ultrasonically cleaned and then coated with the above inorganic vapor deposition material by vacuum vapor deposition to form a multilayer antireflective film.
A square column (size: 5 mm x 5 mm x 20 mm) was cut out of each plastic sheet, and substrate samples, first lens samples (with hardcoat films on two opposing lateral surfaces, the other two lateral surfaces and the top and bottom surfaces remaining uncoated), and second lens samples (with hardcoat films and multilayer antireflective films on two opposing lateral surfaces, the other two lateral surfaces and the top and bottom surfaces remaining uncoated) were obtained.

### 1-3. TMA measurement

Each sample was placed in a TMA device (TMA8310 made by Rigaku) such as that shown schematically in Fig. 2 and the amount of displacement was measured at a constant rate of temperature increase over a temperature range of 30 to 150°C. The coefficient of linear expansion was then calculated from a known mathematical equation using the results obtained.

### 1-4. QUV testing of eyeglass lens samples

The various lens substrate candidate materials selected in 1-1. above were employed to prepare flat sheet lens substrates with two parallel surfaces by injection molding. In the present Example, the lens substrates were prepared by injection molding. However, preparation is also naturally possible by other known molding methods such as cast polymerization.
The film forming materials selected in 1-1. above were used to sequentially form a hardcoat film and a multilayer antireflective film by the same methods as in 1-2. above on each of the lens substrates that had been prepared, yielding eyeglass lens samples.
Each eyeglass lens sample was evaluated for the presence/absence, and degree, of clouding due to cracking on a five-step scale by repeating for a prescribed period a cycle of UV irradiation and dew condensation in a dark location in steps 1 and 2 shown in Table 1 below in a QUV UV radiation fluorescent tube-type accelerated weathering test device made by Q-Lab, followed by exposure to a fluorescent lamp. The results are given in Table 2 below. Samples in which no clouding was observed were evaluated as "O" and those in which clouding was observed as "X" with the number of symbols indicating the degree of clouding.

**[Table 1]**

| | | |
|---|---|---|
| Step 1 UV radiation | Temperature | 60°C |
| | Irradiance of UV radiation | 1.15W/m² |
| | Period | 5 hours |
| Step 2 Generation of dew condensation | Temperature | 50°C |
| | Humidity | 100%RH |
| | Period | 5 hours |

**[Table 2]**

| | | Eyeglass lens sample 11 | Eyeglass lens sample 12 | Eyeglass lens sample 13 | Eyeglass lens sample 14 | Eyeglass lens sample 15 | Eyeglass lens sample 16 |
|---|---|---|---|---|---|---|---|
| QUV testing period | 80 hours | XX | ○ | ○ | ○ | ○ | ○ |
| | 160 hours | XXX | X | ○ | ○ | ○ | ○ |
| | 240 hours | XXX | X | ○ | ○ | ○ | ○ |
| | 320 hours | XXXX | X | ○ | ○ | ○ | ○ |

As shown in Table 2, in eyeglass lens sample 11, which exhibited the greatest degree of clouding, sectional observation by scanning electron microscope (SEM) of the sample following QUV testing revealed contraction of the hardcoat film in the sample that had been tested for 80 hours, cracking in the hardcoat film in the sample that had been tested for 160 hours, and separation of the antireflective film due to complete fracturing of the hardcoat film after 320 hours. Based on these results, cracking of the hardcoat film was determined to be the cause of the clouding shown in Table 2.

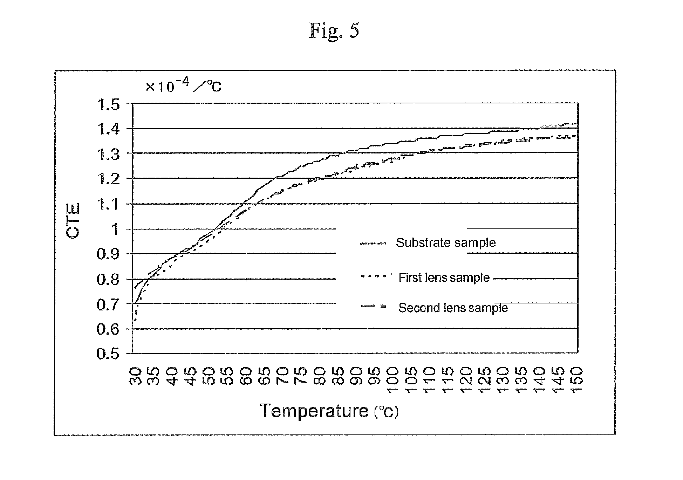

Fig. 5 shows thermal expansion curves obtained by plotting the coefficient of linear expansion of the substrate sample, first lens sample, and second lens sample, prepared using the same materials as in eyeglass lens sample 11, on the y-axis and the measurement temperature on the x-axis. As indicated in Fig. 5, the shapes of the thermal expansion curves of the first lens sample and second lens sample nearly match, while the shape of the thermal expansion curve of the substrate sample differs greatly from those of the first lens sample and second lens sample. Differences of the degree shown in Fig. 5 were not present for eyeglass lens sample 12, but the shape of the thermal expansion curve of the substrate sample differed from those of the first lens sample and second lens sample.
By contrast, for eyeglass lens samples 13 to 16, which did not exhibit clouding after QUV testing as shown in Table 2, the thermal expansion curves of the substrate sample, first lens sample, and second lens sample prepared using the same materials nearly matched in shape.
These results indicated that eyeglass lenses of good durability and free of cracking or film separation even after QUV testing were obtained by determining the lens substrate material and film forming materials of the functional films in combinations such that the shapes of the thermal expansion curves between samples nearly matched.
The above demonstrates the relation between the shape of the thermal expansion curve and the occurrence of cracking. However, it is also possible to quantify the selection standard for the materials used to manufacture eyeglass lenses by using an index in the form of the difference in the integral value of the thermal expansion curve, the average coefficient of thermal expansion, or the coefficient of thermal expansion at a prescribed temperature, for example.
In the above description, the lens substrate material was determined from multiple candidate materials after determining a film forming material for each functional film (hardcoat film, antireflective film). However, it is naturally also possible to determine the film forming materials for manufacturing the finished lens based on the difference in the thermal expansion and contraction characteristic by the same method after determining multiple candidate materials for the film forming materials.

### [Example 2]

### 2-1. Determining the lens substrate material

Six resin materials of differing composition and refractive index were determined as lens substrate materials for manufacturing an eyeglass lens having a hardcoat layer and an antireflective film in this order on a lens substrate.
An organic hardcoat liquid was determined as a candidate material for the hardcoat film material and an inorganic vapor deposition material for forming a multilayer antireflective film was determined as the material for actually manufacturing an antireflective film.

### 2-2. Preparation of a substrate sample and lens samples

Three plastic sheets comprised of the lens substrate material were prepared for each lens substrate material. One sheet was retained without forming a film, and the two remaining sheets were dip coated with the above organic hardcoat liquid and heat treated (cured) to form hardcoat films. Of the two, one was ultrasonically cleaned and then coated with the above inorganic vapor deposition material by vacuum vapor deposition to form a multilayer antireflective film.
A square column (size: 5 mm x 5 mm x 20 mm) was cut out of each plastic sheet, and substrate samples, first lens samples (with hardcoat films on two opposing lateral surfaces, the other two lateral surfaces and the top and bottom surfaces remaining uncoated), and second lens samples (with hardcoat films and multilayer antireflective films on two opposing lateral surfaces, the other two lateral surfaces and the top and bottom surfaces remaining uncoated) were obtained.

### 2-3. TMA measurement

Each sample was placed in a TMA device (TMA8310 made by Rigaku) such as that shown schematically in Fig. 2 and the amount of displacement was measured at a constant rate of temperature increase over a temperature range of 30 to 150°C. A coefficient of linear expansion was then calculated from a known mathematical equation using the results obtained.

### 2-4. QUV testing of eyeglass lens samples

The various lens substrate materials determined in 2-1. above were employed to prepare flat sheet lens substrates with two parallel surfaces by injection molding. In the present Example, the lens substrates were prepared by injection molding. However, preparation is also naturally possible by other known molding methods such as cast polymerization.
The candidate material for the hardcoat film and the antireflective film material for actual manufacturing determined in 2-1. above were used to sequentially form a hardcoat film and a multilayer antireflective film by the same methods as in 2-2. above on each of the lens substrates that had been prepared, yielding eyeglass lens samples.
Each eyeglass lens sample was evaluated for the presence/absence, and degree, of clouding due to cracking on a five-step scale by repeating for a prescribed period a cycle of UV irradiation and dew condensation in a dark location in steps 1 and 2 shown in Table 1 above in a QUV UV radiation fluorescent tube-type accelerated weathering test device made by Q-Lab, followed by exposure to a fluorescent lamp. The results are given in Table 3 below. Samples in which no clouding was observed were evaluated as "○" and those in which clouding was observed as "X" with the number of symbols indicating the degree of clouding.

**[Table 3]**

| | | Eyeglass lens sample 21 | Eyeglass lens sample 22 | Eyeglass lens sample 23 | Eyeglass lens sample 24 | Eyeglass lens sample 25 | Eyeglass lens sample 26 |
|---|---|---|---|---|---|---|---|
| QUV testing period | 80 hours | XX | ○ | ○ | ○ | ○ | ○ |
| | 160 hours | XXX | X | ○ | ○ | ○ | ○ |
| | 240 hours | XXX | X | ○ | ○ | ○ | ○ |
| | 320 hours | XXXX | X | ○ | ○ | ○ | ○ |

As shown in Table 3, in eyeglass lens sample 21, which exhibited the greatest degree of clouding, sectional observation by scanning electron microscope (SEM) of the sample following QUV testing revealed contraction of the hardcoat film in the sample that had been tested for 80 hours, cracking in the hardcoat film in the sample that had been tested for 160 hours, and separation of the antireflective film due to complete fracturing of the hardcoat film after 320 hours. Based on these results, cracking of the hardcoat film was determined to be the cause of the clouding shown in Table 3.
Thermal expansion curves were obtained by plotting the coefficient of linear expansion of the substrate sample, first lens sample, and second lens sample, prepared using the same materials as in eyeglass lens sample 21, on the y-axis and the measurement temperature on the x-axis. In the same manner as in Fig. 5, the shape of the thermal expansion curves of the first lens sample nearly matched that of the second lens sample, but differed greatly from the shape of the thermal expansion curve of the substrate sample. Differences of the degree shown in Fig. 5 were not present for eyeglass lens sample 22, but the shape of the thermal expansion curve of the first lens sample differed from that of the substrate sample.
By contrast, for eyeglass lens samples 23 to 26, which did not exhibit clouding after QUV testing as shown in Table 3, the thermal expansion curves of the substrate sample, first lens sample, and second lens sample prepared using the same materials nearly matched in shape.
These results indicated that the candidate hardcoat film material was a material that provided an eyeglass lens of good durability and without cracking or film separation even after QUV testing when used as a material for actual manufacturing in combination with the lens substrate material and antireflective film material employed in eyeglass lens samples 23 to 26.
The above demonstrates the relation between the shape of the thermal expansion curve and the occurrence of cracking. However, it is also possible to quantify the selection standard for the materials used to manufacture eyeglass lenses by using an index in the form of the difference in the integral value of the thermal expansion curve, the average coefficient of thermal expansion, or the coefficient of thermal expansion at a prescribed temperature, for example.
A specific description of an Example of method 3 has been given above. Method 4 can be similarly implemented.

The present invention is useful in the field of manufacturing eyeglass lenses.

## Claims

1. A method of manufacturing an eyeglass lens having a functional film on a lens substrate, which comprises:
determining materials for manufacturing an eyeglass lens by implementing at least one method from among:
a method of determining materials for manufacturing an eyeglass lens having a functional film on a lens substrate, comprising:
selecting candidate materials for the lens substrate and the functional film;
determining a difference in a thermal expansion and contraction characteristic of a substrate sample comprised of the candidate material for the lens substrate and a lens sample in which a film of the candidate material for the functional film has been formed on the substrate sample; and
determining materials for use in actual manufacturing in the form of a combination of candidate materials such that the difference in the thermal expansion and contraction characteristic falls at or below a predetermined standard; and
a method of determining materials for manufacturing an eyeglass lens having at least a first functional film and a second functional film in this order on a lens substrate, comprising:
selecting candidate materials for the lens substrate, the first functional film, and the second functional film;
determining a difference in a thermal expansion and contraction characteristic of at least two from among a substrate sample comprised of the candidate material for the lens substrate, a first lens sample in which a film of the candidate material for the first functional film has been formed on the substrate sample, and a second lens sample in which a film of the candidate material for the second functional film has been formed on the first lens sample; and
determining materials for use in actual manufacturing in the form of a combination of candidate materials such that the difference in the thermal expansion and contraction characteristic falls at or below a predetermined standard; and
manufacturing an eyeglass lens by use of the materials that have been determined.

2. The method of manufacturing an eyeglass lens according to claim 1, wherein the lens sample is a sample in which a film of the candidate material for the functional film is formed on a lateral surface of the substrate sample with a pillar shape.

3. The method of manufacturing an eyeglass lens according to claim 1 or 2, wherein the thermal expansion and contraction characteristic is a coefficient of thermal expansion calculated from an amount of displacement as determined by thermomechanical analysis (TMA).

4. A method of manufacturing an eyeglass lens having a functional film on a lens substrate, which comprises:
determining materials for manufacturing an eyeglass lens by implementing at least one method from among:
a method of determining materials for manufacturing an eyeglass lens having a first functional film and a second functional film in this order on a lens substrate, comprising:
determining a material of the lens substrate and a material of the second functional film for use in actual manufacturing;
determining a candidate material for the first functional film;
preparing a substrate sample comprised of the lens substrate material, a first lens sample in which a film of the candidate material is formed on the substrate sample, and a second lens sample in which a film of the second functional film material is formed on the first lens sample;
determining a thermal expansion and contraction characteristic of the samples that have been prepared;
determining a material of the first functional film for use in actual manufacturing in the form of a candidate material such that the thermal expansion and contraction characteristic of the first lens sample approximates to within a predetermined standard range the thermal expansion and contraction characteristic of the substrate sample and second lens sample; and
a method of determining materials for manufacturing an eyeglass lens having a first functional film, a second functional film, and a third functional film in this order on a lens substrate, comprising:
determining a material of the first functional film and a material of the third functional film for use in actual manufacturing;
determining a candidate material for the second functional film;
preparing a first lens sample in which a film of the first functional film material is formed on a substrate sample, a second lens sample in which a film of the candidate material is formed on the first lens sample, and a third lens sample in which a film of the third functional film material is formed on the second lens sample;
determining a thermal expansion and contraction characteristic of the samples that have been prepared; and
determining a material of the second functional film for use in actual manufacturing in the form of a candidate material such that the thermal expansion and contraction characteristic of the second lens sample approximates to within a predetermined standard range the thermal expansion and contraction characteristics of the first lens sample and third lens sample; and
manufacturing an eyeglass lens by use of the materials that have been determined.

5. The method of manufacturing an eyeglass lens according to claim 4, wherein the lens sample is a sample in which a film of the material of the functional film or the candidate material is formed on a lateral surface of the substrate sample with a pillar shape.

6. The method of manufacturing an eyeglass lens according to claim 4 or 5, wherein the thermal expansion and contraction characteristic is a coefficient of thermal expansion calculated from an amount of displacement as determined by thermomechanical analysis (TMA).
